# EUROPÄISCHE PATENTSCHRIFT

(11) **EP 2 535 212 B1**
(45) Veröffentlichungstag und Bekanntmachung des Hinweises auf die Patenterteilung: **23.08.2017**
(21) Anmeldenummer: 12000854.5
(22) Anmeldetag: 10.02.2012
(51) Int. Cl.: B60D 1/46

(54) **Abschleppeinrichtung für Nutzfahrzeug mit Leichtbautragstruktur**
Towing device for commercial vehicle with lightweight support structure
Dispositif de remorquage pour véhicule utilitaire doté d'une structure porteuse en construction légère

(30) Priorität: 16.06.2011 DE 102011104431
(43) Veröffentlichungstag der Anmeldung: 19.12.2012
(73) Patentinhaber: MAN Truck & Bus AG, 80995 München (DE)
(72) Erfinder: Beck, Klaus, 82278 Althegnenberg (DE); Bell, Josef, 86971 Peiting (DE)
(74) Vertreter: v. Bezold & Partner Patentanwälte - PartG mbB

(56) Entgegenhaltungen:
- DE-U- 1 914 461
- DE-U1- 29 618 545

## Beschreibung

Zur Erhöhung der Effizienz von Fahrzeugen, insbesondere Nutzfahrzeugen, ist es erwünscht, eine leichtere Bauweise vorzusehen. Dies hat insbesondere die Vorteile, dass Kosten für Material und Herstellung reduziert werden, der Kraftstoffverbrauch sinkt und aufgrund der abnehmenden Leermasse des Kraftfahrzeugs eine höhere Zuladung ermöglicht wird. Jedoch ist es auch erforderlich, ein durch Unfall oder Defekt havariertes Fahrzeug möglichst schnell und ohne zusätzliche Beschädigung des Fahrzeugs abzuschleppen bzw. zu bergen, insbesondere um die Fahrbahn wieder frei zu machen. Auch aus diesem Grund wird bisher eine robuste Bauweise gewählt, wobei eine direkte Abschleppkrafteinleitung in die Hauptträger bzw. Längsträger nötig ist, die dementsprechend massiv ausgelegt sind. Aus DE 296 18 545 U1 z. B. ist eine Abschleppeinrichtung gemäß dem Oberbegriff des Anspruchs 1 bekannt.

Der vorliegenden Erfindung liegt davon ausgehend die Aufgabe zugrunde, eine leichte Bauweise von Fahrzeugen zu ermöglichen, die zugleich mit der Forderung nach einem schnellen Bergen bzw. Abschleppen eines havarierten Fahrzeugs vereinbar ist und somit die aus dem Stand der Technik bekannten Nachteile zumindest teilweise überwindet. Insbesondere soll eine Vorrichtung zum Abschleppen an einem Fahrzeug angegeben werden, die eine Bergung bzw. ein Abschleppen eines Fahrzeugs in Leichtbauweise beschädigungsfrei in kurzer Zeit ermöglicht. Weiterhin soll ein Verfahren zur Erleichterung eines Abschleppens eines Fahrzeugs vorgeschlagen werden.

Die Aufgaben werden gelöst durch die Vorrichtung bzw. das Verfahren der unabhängigen Patentansprüche. Vorteilhafte Weiterbildungen sind Gegenstand der abhängigen Patentansprüche.

Das Abschleppen des Fahrzeugs umfasst neben dem Abschleppen bzw. Ziehen des Fahrzeugs, das auf seinen Rädern steht, insbesondere auch das Bergen eines Fahrzeugs, das insbesondere abseits der Fahrbahn durch Aufwerfungen und/oder sonstige Hindernisse eingekeilt ist oder auch auf einer Seite liegt. Hierbei soll es sowohl möglich sein, das Fahrzeug wieder auf die Räder zu stellen und/oder zum Abtransport auf ein Abschleppfahrzeug zu verbringen, als auch das havarierte Fahrzeug so weit anzuheben, dass über Aufwerfungen und Hindernisse hinweggerollt werden kann. Bei den Fahrzeugen gemäß dieser Erfindung sind in erster Linie Nutzfahrzeuge umfasst, die aufgrund ihrer deutlich höheren Masse und ungünstigeren Massenverteilung im Vergleich zu Personenkraftwagen ein deutlich ungünstigeres Verhältnis von einzuleitender Abschleppkraft und Stabilität der Einzelbauteile des Fahrzeugs aufweisen. Die erfindungsgemäße Vorrichtung und das Verfahren sind jedoch auch in vorteilhafter Weise auf Personenkraftfahrzeuge und ähnliche Fahrzeuge anwendbar. Insbesondere sind aber solche Fahrzeuge umfasst, die nicht mit einer tragenden Karosserie ausgestattet sind.
Die Chassistragstruktur des Fahrzeugs umfasst die mechanischen Bauteile, die zum Halten der verschiedenen Funktionselemente eines Fahrzeugs dienen. Dies sind allgemein neben den Radachsen und dem Motor und insbesondere bei einem Nutzfahrzeug z. B. das Fahrerhaus sowie eine entsprechende Anhängerkupplung. Die Chassistragstruktur weist eine Vorderseite und eine Hinterseite auf, die in Fahrtrichtung des Fahrzeugs nach vorne bzw. nach hinten ausgerichtet sind. Hierbei sind die Vorderseite und die Hinterseite nicht so zu verstehen, dass sie jeweils die vorderste bzw. hinterste Extremität der Chassistragstruktur bilden, sondern vielmehr, dass sie in einem vorderen Bereich bzw. einem hinteren Bereich der Chassistragstruktur angeordnet sind. Weiterhin bildet die meist symmetrische Chassistragstruktur eine - gedachte - Mittellinie, die sich von der Vorderseite zur Hinterseite erstreckt. Die Mittellinie ist insbesondere entlang der Geradeausfahrtrichtung ausgerichtet und befindet sich bevorzugt im Wesentlichen mittig in der Chassistragstruktur.

Weiterhin umfasst das Fahrzeug mindestens ein flexibles Abschleppmittel. Dieses flexible (also nicht-starre) Abschleppmittel ist insbesondere ((lokal) gelenkig und/oder überall) verformbar, so dass z.B. über eine Elastizität des Abschleppmittels eine Verteilung der Abschleppkraft, die in das flexible Abschleppmittel eingeleitet wird, möglich ist. Die Verbindungsstellen hin zur Chassistragstruktur können sowohl Befestigungsstellen sein, an denen das flexible Abschleppmittel zumindest punktuell in allen Freiheitsgraden beschränkt ist, also auch als Führungsstellen, in denen das flexible Abschleppmittel zumindest in einem Freiheitsgrad frei ist. Die Abschleppkraft ist die Kraft, die notwendig ist, um das havarierte Fahrzeug in eine gewünschte Position zu bringen und wird über Haken und Seile und sonstige übliche Abschleppmittel in das flexible Abschleppmittel eingeleitet, so dass diese Abschleppkraft entlang des flexiblen Abschleppmittels zu einer Mehrzahl von Verbindungsstellen verteilt wird. Hierbei wird je nach Art der Verbindungsstelle und Flexibilität des Abschleppmittels die Abschleppkraft durch die Verteilung in dem Abschleppmittel gegenüber der Mehrzahl der Verbindungsstellen soweit reduziert, dass die jeweiligen Komponenten der Chassistragstruktur, an denen sich Verbindungsstellen befinden, übertragen.
Das flexible Abschleppmittel ist insbesondere für die Abschleppkräfte durch seine Flexibilität und Anordnung der Verbindungsstellen nach Leichtbauregeln besonders gewichtsarm ausführbar. Ein ganz besonderer Vorteil liegt aber darin, dass die Abschleppkraft auf eine Mehrzahl von Verbindungsstellen und somit auch auf eine Mehrzahl von Komponenten der Chassistragstruktur umleitbar bzw. einleitbar ist. Hierdurch können die einzelnen Komponenten der Chassistragstruktur gezielt so konstruiert werden, dass sie lediglich für den Zweck im Normalzustand, das heißt während der Fahrt und sonstigen Fahrzeugzwecken (z. B. Zugleistung eines Lastenschleppers) und eben nicht auf ein Einleiten eines großen Teiis der Last beim Abschleppen bzw. Bergen im havarierten Zustand optimiert sind.

Das flexible Abschleppmittel kann nun über seine eigene Elastizität, die Anbindungsart in den Verbindungsstellen, die Ausrichtung in den Verbindungsstellen und/oder sogar über die Elastizität der jeweiligen Bauteile der Chassistragstruktur eingeleitet werden, so dass die Komponenten der Chassistragstruktur maximal bis zu ihrer Belastungsgrenze beansprucht werden, wenn eine beliebige Abschleppkraft in das flexible Abschleppmittel eingeleitet wird. Weiterhin kann das flexible Abschleppmittel eine Sicherheitsfunktion übernehmen, indem es derart ausgelegt ist, dass es nur eine maximale Abschleppkraft aufnehmen kann, so dass keine übermäßige Gesamtkraft auf die Verbindungsstellen bzw. eine jeweilige Verbindungsstelle verteilt wird, die dadurch überlastet werden könnten. Das heißt, dass bei einer Überlastung des auf Sicherheit ausgelegten Abschleppmittels eher das Abschleppmittel nachgibt, z. B. reißt, als dass eine Grenzbelastung der Komponente(n) der Chassistragstruktur erreicht wird. Diese Aufgabe kann alternativ oder ergänzend auch über die Verbindungsstellen erreicht werden, wodurch ein missbräuchliches Einleiten von zu hohen Kräften an den Verbindungsstellen durch weitere Krafteinleitung von außen, die nicht vorgesehen ist, größerer Schaden an dem Fahrzeug verhindert wird. In einer Version, in der diese Sicherheitseinrichtungen nebeneinander bzw. in mechanisch Reihe geschaltet vorgesehen wird, kann zum einen eine Gesamtüberlastung und zum anderen eine Überlastung von einzelnen Komponenten unterbunden werden. Unter Umständen kann es aber auch erwünscht sein, eher eine Beschädigung des Fahrzeugs in Kauf zu nehmen, als eine neue Gefahrenquelle für die an der Bergung Beteiligten zuzulassen. Demnach können das Abschleppmittel und/oder die Verbindungsstellen derart konstruiert sein, dass diese bei einer Überlastung deutlich sichtbare plastische Verformungen zeigen, bevor sie der Überlast endgültig nachgeben.

Ein weiterer besonderer Vorteil dieser Vorrichtung ist, dass das flexible Abschleppmittel so eingerichtet sein kann, dass die notwendige Abschleppkraft an sich reduziert wird. Dies kann z. B. dadurch erreicht werden, dass durch das flexible Abschleppmittel für (viele) räumliche Lagen des Fahrzeugs in Folge von einer Havarie besonders vorteilhafte Hebelpunkte angeboten werden, die sich insbesondere unterhalb der Radachsen des Fahrzeugs befinden. An dieser Stelle sei aber auch darauf hingewiesen, dass das flexible Abschleppmittel sowohl während der gesamten Lebenszeit des Fahrzeugs, sozusagen jederzeit bereit, an den Verbindungsstellen befestigt sein kann, als auch lediglich im Falle einer Havarie an vorbereiteten Verbindungsstellen der Chassistragstruktur mit geringem Zeitaufwand anbringbar ist. Hierbei können bevorzugt auch verschiedene Verbindungsstellen alternativ oder zusätzlich vorgesehen sein, die für jeweilige Zustände einer Havarie die jeweils beste Abschleppkrafteinleitung ermöglichen.

Das flexible Abschleppmittel ist bevorzugt einstückig und einzeln am Fahrzeug vorgesehen. Besonders bevorzugt ist das flexible Abschleppmittel bereits vormontiert.

Gemäß einer vorteilhaften Ausführungsform weist das mindestens eine flexible Abschleppmittel eine Öse an der Vorderseite oder an der Hinterseite auf, und das mindestens eine flexible Abschleppmittel weist Verbindungsstellen an der gegenüberliegenden hinteren Seite oder Vorderseite auf. Die Öse ist insbesondere dadurch gekennzeichnet, dass über einfache Mittel wie einen oder mehrere Haken oder Klemme(n) die Kraft in das flexible Abschleppmittel einleitbar ist. Insbesondere kann die Öse in Form einer (flexiblen, verformbaren) Schlaufe ausgeführt sein, die bevorzugt so ausgerichtet ist, dass z. B. ein Haken aufgrund der im Wesentlichen schlaffen und flexiblen Öse bei Krafteinleitung selbsttätig in eine optimale Position rutscht und hierbei fehlerhafte Krafteinleitungen, die Schaden verursachen könnten, vermieden werden.

In besonders vorteilhafter Weise wird die Kraft über die Öse an der jeweils gegenüberliegenden Seite der tatsächlichen Krafteinleitung über die Verbindungsstellen an der Hinterseite oder Vorderseite angeordnet. Hierdurch wird ein ungünstiges, einseitiges Anheben im Bereich der Abschleppkrafteinleitung vermieden. Weiterhin kann die Öse selbst bereits an der Vorderseite oder an der Hinterseite über eine Verbindungsstelle mit der Chassistragstruktur verbunden sein und weiterhin an der gegenüberliegenden Hinterseite bzw. Vorderseite eine Verbindungsstelle aufweisen. Hierdurch wird gegenüber dem Stand der Technik die Abschleppkraft bereits verteilt, z. B. halbiert, indem sie sowohl die Vorderseite als auch die Hinterseite einen Teil, z. B. jeweils etwa die Hälfte, der Abschleppkraft aufnehmen können.

Das flexible Abschleppmittel ist mit einer Radachse des Fahrzeugs und einem Längsunterzug der Chassistragstruktur verbunden.

In einer weiteren vorteilhaften Ausführungsform der Vorrichtung ist das mindestens eine flexible Abschleppmittel mit zumindest einer der folgenden Komponenten verbunden:
- der Vorderseite,
- der Hinterseite,
- einer Quertraverse der Chassistragstruktur.

Weist z. B. das flexible Abschleppmittel eine oder mehrere Verbindungsstellen an einer der Radachsen des Fahrzeugs auf, so kann durch geeignete Kraftführung - trotz eines Ziehens am Abschleppmittel - ein in der Regel ungünstiges direktes Ziehen an dieser Radachse vermieden werden, dass die Radachse in einer Richtung belastet wird, für die sie im normalen Fahrzustand nicht ausgelegt ist. Beispielsweise können vor und/oder hinter der Radachse und/oder an der Radachse selbst Führungsstellen vorgesehen sein, so dass bei einer Belastung des flexiblen Abschleppmittels die Radachse durch Verkürzung des Abschleppmittels lediglich in Einfederrichtung umgelenkt wird. Hierbei kann als weiterer Vorteil erreicht werden, dass die Radachse, die z. B. hinter einer Aufwerfung oder einem Hindernis liegt, angehoben und somit bei einem Abschleppvorgang entlastet wird. Fahrzeuge des Stands der Technik mussten in solchen Fällen oftmals mit Kränen aus ihrer Havarie gehoben werden, um übermäßige Querlasten auf die Radachse zu vermeiden. Insbesondere kann das Abschleppmittel auch mit dem Längslenker verbunden sein. Diese Komponente wurde bisher nicht in Betracht gezogen, da sie im Vergleich zu der übrigen Chassistragstruktur biegeweich auszulegen ist, um ihrer Aufgabe zur Spurangleichung bei Kurvenfahrten gerecht zu werden. Besonders an diesem Beispiel wird ersichtlich, dass auch solche Komponenten einen Beitrag zur Abschleppkraftaufnahme leisten können, die bisher aufgrund ihrer Aufgaben von einer entsprechenden Einbindung in den Abschleppvorgang kategorisch ausgeschlossen waren.

Vorteilhaft ist insbesondere eine Einbindung der Hinterachse in die Krafteinleitung über das flexible Abschleppmittel, wenn das Kraftfahrzeug in Fahrtrichtung und von der Vorderseite her abgeschleppt wird - oder entsprechend umgekehrt. Hierbei sind besonders bevorzugt eine Verbindung zwischen der Chassistragstruktur und dem Längslenker oder den Blattfedern der Hinterachse. Alternativ kann eine Verbindung zwischen den Längsunterzügen der Chassistragstruktur - und dem Längslenker oder den Blattfedern der Hinterachse vorgesehen sein.

Bei dieser Ausbildung können also Komponenten bzw. Bauteile, die bisher als zu schwach für eine Krafteinleitung beim Abschleppen angesehen wurden, einen Anteil bei der Kraftaufnahme beim Abschleppen übernehmen. Auch können Komponenten, die bisher für die nötige Steifigkeit für den Abschleppvorgang groß und massiv ausgelegt wurden, deutlich verkleinert bzw. an längeren und schwächeren Hebeln angeordnet werden. So kann z. B. die vordere Quertraverse der Chassistragstruktur deutlich weiter nach unten und vorne auskragen als dies beim derzeitigen Stand der Technik üblich ist. Dies hat insbesondere den Vorteil, dass eine größere Kühlfläche unterhalb des Fahrerhauses angebracht werden kann, die auf oder vor der Quertraverse angeordnet ist. Durch große Kühlflächen können die Fahranteile mit Kühlerluft, d.h. mit aktiviertem Ventilator und evtl. Kühlkreislauf, verringert werden, wodurch der Kraftstoffverbrauch solcher Fahrzeuge deutlich reduziert werden kann.

Das flexible Abschleppmittel kann weiterhin auch so angeordnet sein, dass mit üblichen Bergungsfahrzeugen oder Kränen eine schnelle und unkomplizierte Abschleppkrafteinleitung möglich ist, ohne dass es zu einer Beschädigung der jeweiligen Komponenten mit den jeweiligen Verbindungsstellen kommt.

In einer weiteren vorteilhaften Ausführung ist das mindestens eine flexible Abschleppmittel ein Stahlseil.

Gegenüber anderen Ausführungsformen der flexiblen Abschleppmittel hat ein Stahlseil oder dergleichen den Vorteil, dass die eingeleitete Kraft stets als Zugkraft in der Richtung, nämlich entlang des Seils, geführt wird, die die maximale Festigkeit aufweist. Somit ist ein Seil besonders robust gegenüber möglicherweise fehlerhafter oder verrutschter Krafteinleitung. Insbesondere Stahlseile bieten viele Vorteile für die hier zugrunde liegende Aufgabenstellung: sie weisen hohe Flexibilität, Festigkeit in Vorzugsrichtung (Seilrichtung), Robustheit gegen mechanischen Abrieb und lange Lebensdauer (bei einer stets am Fahrzeug montierten Ausführungsform) auf. Auch kann ein Stahlseil, welches aufgrund von Alterung oder sonstigen Materialschwächungen frühzeitig reißt, mit einfachen Mitteln, nämlich Spleißen, innerhalb weniger Minuten von Hand oder mit Spleißapparat zuverlässig geflickt werden.

In einer weiteren vorteilhaften Ausbildung sind zumindest ein Teil der Verbindungsstellen mit der Chassistragstruktur durch eine Seilklemme gebildet.

Durch eine Seilklemme sind in schneller, unkomplizierter und ggf. lösbarer Weise eine Vielzahl von flexiblen Abschleppmitteln im Falle einer Havarie an den Verbindungsstellen mit der Chassistragstruktur verbindbar. Die Seilklemme, die auf den Umfang eines flexibeln Abschleppmittels aufgeklemmt bzw. aufgepresst wird, kann an einer in einer beliebigen Stelle des flexiblen Abschleppmittels angeordnet werden und überträgt aufgrund der hohen Presskraft einen großen Teil der eingeleiteten Abschleppkraft auf die Verbindungsstelle. Weiterhin können Seilklemmen so ausgerichtet sein, dass sie nur Kräfte bis zu einer bestimmten Grenze übertragen können und danach das flexible Abschleppmittel zu rutschen beginnt. Hierdurch wird in einfacher Weise verhindert, dass eine übermäßige Krafteinleitung in die jeweilige Verbindungsstelle stattfinden kann.

Nach einer weiteren vorteilhaften Ausbildung ist das mindestens eine flexible Abschleppmittel mit verschiedenen Komponenten des Fahrzeugs derartig verbunden, dass das mindestens eine flexible Abschleppmittel in mehreren horizontalen Ebenen verläuft.

Hierbei wird insbesondere erreicht, dass bei Einleitung der Kraft in das flexible Abschleppmittel die Krafteinleitung in die jeweiligen Komponenten in eine Richtung umgelenkt wird, in der die jeweilige Komponente besonders steif ist. Insbesondere können die Radachsen des Fahrzeugs angehoben werden, so dass sie beim Bewegen über Aufwerfungen oder Hindernisse nicht oder nur gering beschädigt werden. Weiterhin kann bei einer besonders tiefliegenden Quertraverse, die z. B. tiefer liegt als alle anderen am Abschleppen beteiligten Komponenten eine Krafteinleitung vermieden werden, bei der der Druck auf die Fahrzeugachsen erhöht wird, vielmehr kann die Kraft so eingeleitet werden, dass kein Kippmoment von oberhalb der Radachsen eingeleitet wird und sogar die Radachsen durch eine Aufwärtsziehbewegung entlastet wird. Hierbei sei darauf hingewiesen, dass die horizontalen Ebenen parallel zum Boden ausgerichtet sind, wenn sich das Fahrzeug in normalen Stand befindet oder mit anderen Worten im normalen Zustand von Radachsen aufgespannt wird.

In einer weiteren vorteilhaften Ausbildung ist das mindestens eine flexible Abschleppmittel wenigstens in einem Abschnitt spiegelsymmetrisch zur Mittellinie angeordnet.

Hiermit ist insbesondere gemeint, dass das flexible Abschleppmittel links und rechts zur normalen Fahrtrichtung in gleichem Abstand zur Mittellinie angeordnet ist. Hiermit ist insbesondere gemeint, dass die jeweiligen Verbindungsstellen an der gleichen Position gespiegelt zur Mittellinie auch auf der jeweilig anderen Seite angeordnet ist. Somit wird in einfacher Weise vermieden, dass Chassistragstruktur verzogen wird, auch wenn es zu einer Überlastung von Einzelbauteilen kommt. Insbesondere ist hierbei aber auch gemeint, dass das flexible Abschleppmittel keine Linie bildet, die stets parallel zur Mittellinie verläuft, sondern vielmehr sich von den jeweils besten Verbindungsstellen entlang der Chassistragstruktur schlängelt. Auch kann hierdurch eine inhärente Steifigkeit der Chassistragstruktur in Querrichtung zur Aufnahme der Abschleppkraft genutzt werden, die bisher ungenutzt bleiben musste. An dieser Stelle sei darauf hingewiesen, dass mit einer Mittellinie nicht nur die geometrische Mittellinie gemeint sein muss, sondern auch eine Mittellinie der Massenverteilung bilden kann, d.h. dass die Mittellinie auch entlang der Schwerpunkte verlaufen kann. Bei einer entsprechenden Anordnung des flexiblen Abschlepomittels wird nach dieser Ausfühungsform ein Kippmoment auf das Fahrzeug bei der Einleitung der Abschleppkraft unterbunden.

Das zumindest eine flexible Abschleppmittel weist mit der Chassistragstruktur Verbindungsstellen auf, die zumindest windschief zur Mittellinie oder nicht zueinander fluchtend angeordnet sind. Es können auch beide Merkmale erfüllt sein, um die Krafteinleitung in die Chassistragstruktur anzupassen und zu verteilen.

Durch derartig angeordnete Verbindungspunkte können Verbindungsstellen genutzt werden, die sich in verschiedenen horizontalen oder vertikalen Ebenen befinden. Vor allem aber können durch die windschiefe und/oder nicht fluchtende Anordnung der Verbindungspunkte zueinander Überführungsstellen per Reibung oder Befestigungsstellen per Kraftschluss ein Teil der Abschleppkraft auf die Verbindungsstellen übertragen werden, die bei einer parallelen oder fluchtenden Anordnung nicht übertragen würde. Insbesondere kann durch die Auslegung der Lage der Verbindungsstellen eine Kraftumlenkung erzielt werden, die die Ausgestaltung der Verbindungsstellen stark vereinfacht - z. B. aufwendige Verbindungskonstruktionen - ermöglicht.

Im Rahmen der Erfindung wird auch ein Verfahren zum Abschleppen eines Fahrzeugs mit einer Chassistragstruktur vorgeschlagen, wobei mindestens ein flexibles Abschleppmittel mit mehreren Komponenten einer Chassistragstruktur kraftübertragend verbunden ist, wobei durch Einleiten einer Abschleppkraft auf einen Abschnitt des flexiblen Abschleppmittels die Abschleppkraft zumindest mittelbar auf mehrere Komponenten der Chassistragstruktur derartig übertragen wird, dass diese mehreren Komponenten jeweils einen Teil der Abschleppkraft aufnehmen.

Das Verfahren zum Abschleppen eines Fahrzeugs betrifft nun insbesondere das Bergen und Abschleppen eine havarierten Fahrzeugs, insbesondere Nutzfahrzeugs, welches aufgrund dieses Verfahrens besonders schnell abgeschleppt werden kann und des Weiteren gemäß den Regeln des Leichtbaus allein für den normalen Fahrzustand konstruiert werden kann. Weiterhin kann dieses Verfahren auch auf Fahrzeuge des Stands der Technik angewendet werden, wobei hierdurch eine Erhöhung der Abschleppkraft sowie eine erhöhte Flexibilität der Wahl der Abschleppkrafteinleitungspunkte erreicht werden kann. Das mindestens eine flexible Abschleppmittel, welches z. B. durch ein Seil ausgeführt sein kann, ist kraftübertragend verbunden, durch z. B. Seilklemmen oder Führungsringe, mit mehreren Komponenten einer Chassistragstruktur, die für die normale Verwendung des Fahrzeugs, das heißt z. B. für das Fahren, notwendig sind.

Das notwendige Einleiten einer Abschleppkraft eines havarierten Fahrzeugs kann nun auf Abschnitte des flexiblen Abschleppmittels durchgeführt werden, wodurch sich nicht nur die Anzahl der möglichen Abschlepppunkte erhöht, sondern auch eine Anpassung an die jeweilige Lage des havarierten Fahrzeugs möglich ist. Über das flexible Abschleppmittel wird die Abschleppkraft zumindest mittelbar auf mehrere Komponenten der Chassistragstruktur übertragen. Hierbei kann z. B. über eine Einleitung der Kraft in die Radachsen oder den Längslenker über Federdämpfer die Abschleppkraft auf die Chassistragstruktur übertragen werden. Auch können an den Verbindungsstellen mit den jeweiligen Komponenten zusätzliche Federn und Dämpfer vorgesehen sein, die die Verteilung bzw. Dosierung der Abschleppkraft auf die jeweiligen Komponenten der Chassistragstruktur reguliert. Es kann aber auch eine unmittelbare Einleitung der Kraft durch stoffschlüssige Verbindungen wie z. B. Schweißen, Löten oder Hochleistungskleben vorgesehen sein, die besonders für die Ausführung in Leichtbauform geeignet sind, aber auch zur Anbringung am Fahrzeug im havarierten Zustand, z. B. wenn dieses ein Fahrzeug des Stands der Technik ist und keine vorbereiteten Verbindungsstellen an der Chassistragstruktur aufweist.

Vorteilhaft bei diesem Verfahren ist, dass die mehreren Komponenten jeweils nur einen Teil der Abschleppkraft aufnehmen müssen. Hierdurch kann zum einen die Gesamtkraft, die zum Abschleppen des havarierten Fahrzeugs nötig ist, erhöht werden und zum anderen können bisher ungenutzte Komponenten, die allein zu schwach sind, zur Verteilung der Kraftaufnahme mit eingebunden werden. Auch kann eine Umlenkung der Abschleppkraft in eine besonders steife Richtung einer Komponente der Chassistragstruktur umgelenkt werden.

Das Verfahren ist insbesondere auf das obig beschriebene Fahrzeug anwendbar und daher ist auch das Fahrzeug für die Durchführung des beschriebenen Verfahrens besonders geeignet.

Insgesamt werden mit dem Fahrzeug und dem Verfahren eine Reihe von Vorteilen erzielt, nämlich wird die Abschleppkraft entsprechend nach der Tragfähigkeit von einzelnen Komponenten verteilt, wodurch z. B. auch Komponenten einer Chassistragstruktur mit Längsunterzügen genutzt werden können; die mögliche Gesamtabschleppkraft, die auf das Fahrzeug über das flexible Abschleppmittel einleitbar ist, ist nicht durch die Tragfähigkeit einzelner Komponenten beschränkt, wodurch weiter eine Chassistragstruktur in Leichtbauweise und/oder eine Verkürzung der Chassistragstruktur möglich wird; und ein breit und groß ausgelegter Frontkühler kann eingesetzt werden, da die Quertraverse eine nur eine weniger steife Anbindung an die Chassistragstruktur benötigt. Hierbei kann auch der Angriffspunkt auf das flexible Abschleppmittel sehr tief gelagert werden, wodurch die vordere Radachse entlastet werden kann. Weiterhin kann der Pfad der Abschleppkraft zu durch Hindernisse am Losrollen gehinderte Räder verkürzt werden und zudem die (vordere) Radachse durch das flexible Abschleppmittel angehoben werden. Der Zugriff auf das Abschleppmittel ist gegenüber dem Stand der Technik z. B. aufgrund einer groß ausgeführten Schlaufe erleichtert. Darüber hinaus kann das flexible Abschleppmittel an ein elastisch am Fahrzeug befestigtes Fangmaul angebunden werden und insbesondere kann ein System in irgendeiner obig beschriebenen Weise auch in rückwärtiger Richtung bzw. als geschlossener Kreis am Fahrzeug angeordnet werden, so dass auch ein rückwärtiges Abschleppen des Fahrzeugs möglich ist.
Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Es zeigen:
- Fig. 1:: einen Sattelschlepper mit tiefgezogener Quertraverse;
- Fig. 2:: eine Anordnung eines flexiblen Abschleppmittels an der Vorderachse eines Fahrzeugs.

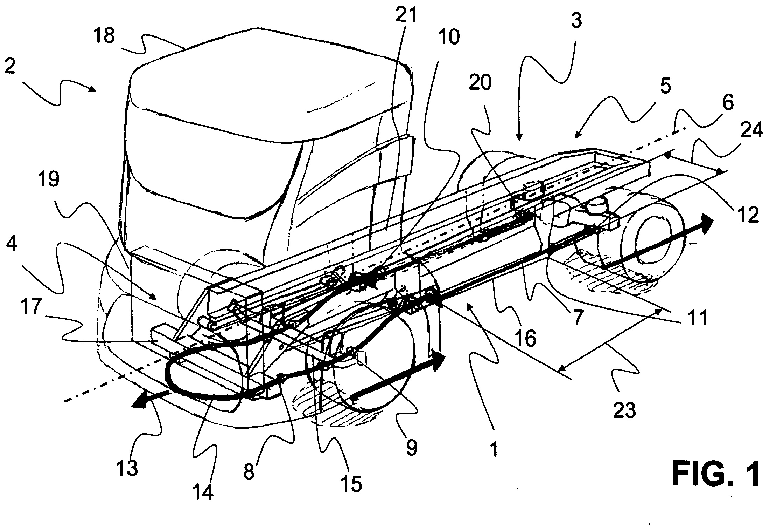

Fig. 1 zeigt ein Fahrzeug 2, hier in Form eines Sattelschleppers, das die erfindungsgemäße Vorrichtung 1 aufweist und für das erfindungsgemäße Verfahren geeignet ist. Im Mittelpunkt der Fig. 1 steht die Chassistragstruktur 3, an die das Fahrerhaus 18 mit großer Kühlfläche 19 in Andeutung angebunden ist. Weiterhin befindet sich die Chassistragstruktur 3 auf der vorderen Radachse 15 und dem hinteren Längslenker 20. Besondere Aufmerksamkeit ist auf die tiefgezogene vordere Quertraverse 17 zu richten, die sich nicht wie im üblichen Stand der Technik in Verlängerung der Hauptträger bzw. Längsträger 21 befindet, sondern nach unten und vorne kragt. Eine solche Schwächung der Struktur war im bisherigen Stand der Technik nicht möglich, erlaubt aber die Anbringung einer besonders großen Kühlfläche 19. Eine erste Verbindungsstelle 8 befindet sich an der Quertraverse 17. Eine zweite Verbindungsstelle 9 befindet sich an der vorderen Radachse 15. Eine dritte Verbindungsstelle 10 ist an einem vorderen Bereich des Längsunterzugs 16 und eine vierte Verbindungsstelle 11 an einem hinteren Bereich des Längsunterzugs 16 angebracht. Und weiter ist eine fünfte Verbindungsstelle 12 an dem Längslenker 20 angeordnet. In diesem Beispiel wird die Vorderseite 4 der Chassistragstruktur 3 durch die Komponenten Quertraverse 17, Radachse 15 und dem Vorderbereich des Längsunterzugs 16 gebildet. Die Hinterseite 5 wird in diesem Beispiel durch den Längslenker 20 und die hintere Seite des Längsunterzugs 16 gebildet. Demnach sind in diesem Beispiel die erste bis dritte Verbindungsstelle 8, 9, 10 der Vorderseite zuzuordnen und die vierte und fünfte Verbindungsstelle 11 und 12 der Hinterseite 5 zuzuordnen. In dem vorliegenden Beispiel wird die Abschleppkraft 13 über eine Öse 14 an der Vorderseite 4 der Chassistragstruktur 3 von einem flexiblen Abschleppmittel 7 in Form eines (einzigen, einzelnen) Stahlseils eingeleitet. Gut zu erkennen ist, dass sich das flexible Abschleppmittel 7 über mehrere horizontale Ebenen und symmetrisch zur Mittellinie 6 entlang der Verbindungsstellen 8 bis 12 schlängelt. Hierbei ist es durchaus möglich, einen geschlossenen Kreis zu bilden, so dass das flexible Abschleppmittel 7 auch an der Hinterseite 5 eine Öse bildet. Liegt das Fahrzeug 2 z. B. auf der linken oder rechten Seite, so ist es auch möglich, eine Seite z. B. im Bereich des Längsunterzugs 16 des flexiblen Abschleppmittels 7 als eine Öse zu nutzen, um ein geeignetes Moment auf das Fahrzeug 2 einzuleiten und dieses somit wieder aufzurichten. Dem Fachmann wird beim Betrachten der Fig. 1 unmittelbar klar, dass auch beliebige andere Anordnungen insbesondere angepasst an jeweilige Fahrzeuge bzw. Chassistragstrukturen möglich sind. Weiterhin ist in der Fig. 1 ein Abschnitt 23 gezeigt, der sich in diesem Beispiel über die Länge des Längsunterzugs 16 erstreckt, in welchem das flexible Abschleppmittel spiegelsymmetrisch zu der Mittellinie 6 angeordnet ist. In einem weiteren davon unabhängigen Aspekt ist der Fig. 1 zu entnehmen, dass das flexible Abschleppmittel 7 über die fünften Verbindungsstellen 12 an dem Längslenker 20 mit einem Abstand 24 zur Mittellinie 6 angebracht ist.

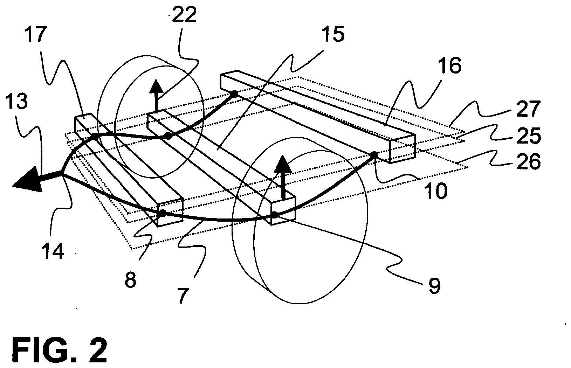

Fig. 2 zeigt rein schematisch drei Balken, wobei der mittlere und tiefer gelegene Balken durch die angedeuteten Räder als Radachse 15 kenntlich gemacht ist. Der vordere Balken, also der Balken links in der Fig. 2, stellt die Quertraverse 17 dar und der dritte Balken versinnbildlicht den vorderen Bereich des Längsunterzugs 16. Jedoch können diese Balken auch nicht-durchgehende Balken sein. Vielmehr werden in der Fig. 2 lediglich Anbindungspunkte bzw. Komponenten der Chassistragstruktur schematisch versinnbildlicht. Dementsprechend können der vordere und hintere Balken auch andere kraftaufnahmefähige Punkte z. B. eines Längsträgers 21 sein, wie sie beispielhaft in der Fig. 1 dargestellt sind. Allerdings zeigt die Fig. 2 eindeutig, dass die Radachse 15 tiefer gelegen ist als die beidseitig angeordneten Balken und somit die Verbindungsstellen 9 tiefer liegen als die Verbindungsstellen 8 und 10. Hierdurch wird beim Einleiten der Abschleppkraft 13 auf das flexible Abschleppmittel 7 - hier auch als Öse 14 ausgeführt - wird durch die gewählte Anordnung die in aller Regel mit Federn und Dämpfern (nicht dargestellt) aufgehängte Radachse 15 ausschließlich in nach oben gerichteter Weise belastet, was durch die Kraftpfeile 22 angedeutet ist. Hierdurch wird eine Querbelastung der Radachse 15 in einer Anbindung durch das flexible Abschleppmittel 7 über die Anordnung der Verbindungsstellen 8 bis 10 unmöglich. Darüber hinaus wird die Radachse 15 entlastet oder sogar angehoben, so dass sie über ein eventuelles Hindernis, wie es z. B. in der Fig. 1 an den Rädern angedeutet ist, hinweggehoben werden können. Weiterhin sind in der Fig. 2 drei voneinander beabstandete Ebenen 25, 26, 27 dargestellt, die horizontal, d.h. parallel zur Ebene aller Radachsen 15 im Normalzustand des Fahrzeugs 2, ausgerichtet sind und jeweils durch eine Verbindungsstelle verlaufen. Hier liegt die erste Verbindungsstelle 8 an der Quertraverse 17 in einer ersten horizontalen Ebene 25, die zweite Verbindungsstelle 9 an der Radachse 15 in einer zweiten horizontalen Ebene 26 und die dritte Verbindungsstelle 10 an dem vorderen Bereich des Längsunterzugs 16 in einer dritten horizontalen Ebene 27.

Damit löst die Erfindung zumindest teilweise die im Zusammenhang mit dem Stand der Technik geschilderten technischen Probleme. Insbesondere werden eine Vorrichtung und ein Verfahren vorgeschlagen, wodurch eine Chassistragstruktur in Leichtbauweise ermöglicht wird, ohne dass im Falle einer Havarie des Fahrzeugs bei der Bergung notwendigerweise Beschädigungen an der Chassistragstruktur stattfinden. Weiterhin ist es auch möglich, Fahrzeuge des Stands der Technik mit der entsprechenden Vorrichtung auszurüsten, womit ein schnelles Bergen eines havarierten Fahrzeugs ermöglicht wird.

### Bezugszeichenliste

- 1: Vorrichtung
- 2: Fahrzeug
- 3: Chassistragstruktur
- 4: Vorderseite
- 5: Hinterseite
- 6: Mittellinie
- 7: flexibles Abschleppmittel
- 8: erste Verbindungsstelle
- 9: zweite Verbindungsstelle
- 10: dritte Verbindungsstelle
- 11: vierte Verbindungsstelle
- 12: fünfte Verbindungsstelle
- 13: Abschleppkraft
- 14: Öse
- 15: Radachse
- 16: Längsunterzug
- 17: Quertraverse
- 18: Fahrerhaus
- 19: Kühlfläche
- 20: Längslenker
- 21: Längsträger
- 22: Kraftpfeil
- 23: Abschnitt
- 24: Abstand
- 25: erste horizontale Ebene
- 26: zweite horizontale Ebene
- 27: dritte horizontale Ebene

## Patentansprüche

1. Fahrzeug (2) mit einer Vorrichtung (1) zum Abschleppen, aufweisend:
- eine Chassistragstruktur (3) mit einer Vorderseite (4), einer Hinterseite (5) und einer Mittellinie (6), die sich von der Vorderseite (4) zur Hinterseite (5) erstreckt; und
- mindestens ein flexibles Abschleppmittel (7), aufweisend mehrere Verbindungsstellen (8, 9, 10, 11, 12) hin zur Chassistragstruktur (3), wobei eine in das flexible Abschleppmittel (7) eingeleitete Abschleppkraft (13) über eine Mehrzahl der Verbindungsstellen (8, 9, 10, 11, 12) verteilt in die Chassistragstruktur (3) einleitbar ist,
wobei
- das mindestens eine flexible Abschleppmittel (7) mit der Chassistragstruktur (3) Verbindungsstellen (8, 9, 10, 11, 12) aufweist, die wenigstens windschief zur Mittellinie (6) oder nicht zueinander fluchtend angeordnet sind,
**dadurch gekennzeichnet dass**
- das mindestens eine flexible Abschleppmittel (7) mit einer Radachse (15) des Fahrzeugs (2) und einem Längsunterzug (16) der Chassistragstruktur (3) verbunden ist.

2. Fahrzeug (2) nach Anspruch 1, wobei das mindestens eine flexible Abschleppmittel (7) eine Öse (14) an der Vorderseite (4) oder an der Hinterseite (5) umfasst, und das mindestens eine flexible Abschleppmittel (7) Verbindungsstellen an der gegenüberliegenden Hinterseite (5) oder Vorderseite (4) aufweist.

3. Fahrzeug (2) nach Anspruch 1 oder 2, wobei das mindestens eine flexible Abschleppmittel (7) mit zumindest einer der folgenden Komponenten verbunden ist:
- der Vorderseite (4);
- der Hinterseite (5);
- einer Quertraverse (17) der Chassistragstruktur (3).

4. Fahrzeug (2) nach einem der vorhergehenden Ansprüche, wobei das mindestens eine flexible Abschleppmittel (7) ein Stahlseil ist.

5. Fahrzeug (2) nach einem der vorhergehenden Ansprüche, wobei zumindest ein Teil der Verbindungsstellen mit der Chassistragstruktur (3) durch eine Seilklemme gebildet ist.

6. Fahrzeug (2) nach einem der vorhergehenden Ansprüche, wobei das mindestens eine flexible Abschleppmittel (7) mit verschiedenen Komponenten des Fahrzeugs (2) derartig verbunden ist, dass das mindestens eine flexible Abschleppmittel (7) in mehreren horizontalen Ebenen (25, 26, 27) verläuft.

7. Fahrzeug (2) nach einem der vorhergehenden Ansprüche, wobei das mindestens eine flexible Abschleppmittel (7) wenigstens in einem Abschnitt (23) spiegelsymmetrisch zur Mittellinie (6) angeordnet ist.

8. Verfahren zum Abschleppen eines Fahrzeugs (2) mit einer Chassistragstruktur (3), wobei mindestens ein flexibles Abschleppmittel (7) mit mehreren Komponenten einer Chassistragstruktur (3) kraftübertragend verbunden ist, wobei durch Einleiten einer Abschleppkraft (13) auf einen Abschnitt des flexiblen Abschleppmittels (7) die Abschleppkraft (13) zumindest mittelbar auf mehrere Komponenten der Chassistragstruktur (3) derartig übertragen wird, dass diese mehreren Komponenten jeweils einen Teil der Abschleppkraft (13) aufnehmen, wobei das mindestens eine flexible Abschleppmittel (7) mit der Chassistragstruktur (3) Verbindungsstellen aufweist, die wenigstens windschief zur Mittellinie (6) oder nicht zueinander fluchtend angeordnet sind, und das mindestens eine flexible Abschleppmittel (7) mit einer Radachse (15) des Fahrzeugs (2) und einem Längsunterzug (16) der Chassistragstruktur (3) verbunden ist.

## Claims

1. Vehicle (2) having a device (1) for towing, having:
- a chassis supporting structure (3) with a front side (4), a rear side (5) and a centre line (6) which extends from the front side (4) to the rear side (5); and
- at least one flexible towing means (7), having a plurality of connecting points (8, 9, 10, 11, 12) towards the chassis supporting structure (3), it being possible for a towing force (13) which is introduced into the flexible towing means (7) to be introduced into the chassis supporting structure (3) in a manner which is distributed over a plurality of the connecting points (8, 9, 10, 11, 12),
- the at least one flexible towing means (7) having connecting points (8, 9, 10, 11, 12) with the chassis supporting structure (3), which connecting points are arranged at least in a skewed manner with respect to the centre line (6) or such that they are not aligned with one another,
**characterized in that**
- the at least one flexible towing means (7) is connected to a wheel axle (15) of the vehicle (2) and a longditudinal beam (16) of the chassis supporting structure (3).

2. Vehicle (2) according to Claim 1, the at least one flexible towing means (7) comprising an eye (14) on the front side (4) or on the rear side (5), and the at least one flexible towing means (7) having connecting points on the opposite rear side (5) or front side (4).

3. Vehicle (2) according to Claim 1 or 2, the at least one flexible towing means (7) being connected to at least one of the following components:
- the front side (4);
- the rear side (5);
- a crossmember (17) of the chassis supporting structure (3).

4. Vehicle (2) according to one of the preceding claims, the at least one flexible towing means (7) being a steel cable.

5. Vehicle (2) according to one of the preceding claims, at least part of the connecting points with the chassis supporting structure (3) being formed by a cable clamp.

6. Vehicle (2) according to one of the preceding claims, the at least one flexible towing means (7) being connected to various components of the vehicle (2) in such a way that the at least one flexible towing means (7) extends in a plurality of horizontal planes (25, 26, 27).

7. Vehicle (2) according to one of the preceding claims, the at least one flexible towing means (7) being arranged mirror-symmetrically with respect to the centre line (6) at least in one section (23).

8. Method for towing a vehicle (2) having a chassis supporting structure (3), at least one flexible towing means (7) being connected in a force-transmitting manner to a plurality of components of a chassis supporting structure (3), a towing force (13) being transmitted at least indirectly to a plurality of components of the chassis supporting structure (3) by a towing force (13) being introduced to a section of the flexible towing means (7), in such a way that the said plurality of components in each case absorb part of the towing force (13), the at least one flexible towing means (7) having connecting points with the chassis supporting structure (3), which connecting points are arranged at least in a skewed manner with respect to the centre line (6) or such that they are not aligned with one another and the at least one flexible towing means (7) being connected to a wheel axle (15) of the vehicle (2) and a longitudinal beam (16) of the chassis supporting structure (3).

## Revendications

1. Véhicule (2) comprenant un dispositif (1) de remorquage, présentant :
- une structure de support de châssis (3) avec un côté avant (4), un côté arrière (5) et un axe médian (6) qui s'étend depuis le côté avant (4) vers le côté arrière (5); et
- au moins un moyen de remorquage flexible (7), présentant plusieurs points de connexion (8, 9, 10, 11, 12) vers la structure de support de châssis (3), une force de remorquage (13) introduite dans le moyen de remorquage flexible (7) pouvant être introduite de manière répartie sur une pluralité des points de connexion (8, 9, 10, 11, 12) dans la structure de support de châssis (3),
- l'au moins un moyen de remorquage flexible (7) présentant des points de connexion (8, 9, 10, 11, 12) avec la structure de support de châssis (3), lesquels sont disposés au moins en biais par rapport à l'axe médian (6) ou ne sont pas disposés en alignement les uns avec les autres,
**caractérisé en ce que**
- l'au moins un moyen de remorquage flexible (7) est connecté à un essieu de roue (15) du véhicule (2) et à une poutre longitudinale (16) de la structure de support de châssis (3).

2. Véhicule (2) selon la revendication 1, dans lequel l'au moins un moyen de remorquage flexible (7) comprend un oeillet (14) sur le côté avant (4) ou sur le côté arrière (5), et l'au moins un moyen de remorquage flexible (7) présente des points de connexion au niveau du côté arrière (5) ou du côté avant (4) opposé.

3. Véhicule (2) selon la revendication 1 ou 2, dans lequel l'au moins un moyen de remorquage flexible (7) est connecté à au moins l'un des composants suivants :
- le côté avant (4) ;
- le côté arrière (5) ;
- une traverse (17) de la structure de support de châssis (3).

4. Véhicule (2) selon l'une quelconque des revendications précédentes, dans lequel l'au moins un moyen de remorquage flexible (7) est un câble d'acier.

5. Véhicule (2) selon l'une quelconque des revendications précédentes, dans lequel au moins une partie des points de connexion à la structure de support de châssis (3) est formée par un serre-câble.

6. Véhicule (2) selon l'une quelconque des revendications précédentes, dans lequel l'au moins un moyen de remorquage flexible (7) est connecté à différents composants du véhicule (2) de telle sorte que l'au moins un moyen de remorquage flexible (7) s'étende dans plusieurs plans horizontaux (25, 26, 27).

7. Véhicule (2) selon l'une quelconque des revendications précédentes, dans lequel l'au moins un moyen de remorquage flexible (7) est disposé au moins dans une portion (23) avec une symétrie spéculaire par rapport à l'axe médian (6).

8. Procédé de remorquage d'un véhicule (2) comprenant une structure de support de châssis (3), au moins un moyen de remorquage flexible (7) étant connecté à plusieurs composants d'une structure de support de châssis (3) par transfert de force, la force de remorquage (13) étant transmise au moins indirectement à plusieurs composants de la structure de support de châssis (3) par introduction d'une force de remorquage (13) sur une portion du moyen de remorquage flexible (7) de telle sorte que ces plusieurs composants reçoivent à chaque fois une partie de la force de remorquage (13), l'au moins un moyen de remorquage flexible (7) présentant des points de connexion à la structure de support de châssis (3) qui sont disposés au moins en biais par rapport à l'axe médian (6) ou qui ne sont pas alignés les uns avec les autres, et l'au moins un moyen de remorquage flexible (7) étant connecté à un essieu de roue (15) du véhicule (2) et à une poutre longitudinale (16) de la structure de support de châssis (3).
